# EUROPÄISCHE PATENTSCHRIFT

(11) **EP 3 669 654 B1**
(45) Veröffentlichungstag und Bekanntmachung des Hinweises auf die Patenterteilung: **27.10.2021**
(21) Anmeldenummer: 18213638.2
(22) Anmeldetag: 18.12.2018
(51) Int. Cl.: A01N 25/28, A01N 43/80, A01N 47/12, A01N 43/653, A01P 1/00

(54) **MIKROKAPSELN ENTHALTEND OIT IN KOMBINATION MIT PROPICONAZOL UND/ODER IPBC**
MICROCAPSULES COMPRISING OIT IN COMBINATION WITH PROPICONAZOL AND/OR IPBC
MICROCAPSULES COMPRENANT OIT EN COMBINAISON AVEC PROPICONAZOL ET/OU IPBC

(43) Veröffentlichungstag der Anmeldung: 24.06.2020
(73) Patentinhaber: LANXESS Deutschland GmbH, 50569 Köln (DE)
(72) Erfinder: Uhr Hermann,, 51373 Leverkusen (DE); Möws Katrin, 44137 Dortmund (DE); Sames Thomas, 15241 Pittsburgh, (US)

(56) Entgegenhaltungen:
- WO-A1-2008/080963
- WO-A1-2015/128382

## Beschreibung

### Mikrokapseln

Die vorliegende Erfindung betrifft Mikrokapseln, enthaltend wenigstens zwei spezielle Biozide sowie zumindest ein Melamin-Formaldehyd-Polymer, ein Verfahren zu ihrer Herstellung, sowie ihre Verwendung zum Schutz von technischen Materialien.

Aus dem Stand der Technik sind vor mikrobiologischem Befall geschützte technische Materialien wie Dichtungsmassen mittels mikroverkapselten Biozide bereits bekannt.

WO2008/080963 (DE102006061890A1) beschreibt Dichtungsmassen, die als Biozid spezielle Isothiazolinone wie beispielsweise 2-n-Octyl-4-isothiazolin-3-on (OIT) enthalten, wobei das Biozid in Mikropartikeln aus einem Harz eingeschlossen ist.

Im Hinblick auf das Leaching Verhalten von OIT aus den Mikropartikeln besteht aber noch Verbesserungspotential. Aufgabe der vorliegenden Erfindung war es daher, das Leaching Verhalten von OIT zu verbessern.

Es wurde nun gefunden, dass sich bei speziellen Mischungsverhältnissen von OIT und Propiconalzol und/oder 3-lod-2-propinyl-butyl-carbamat (IPBC) das Leaching Verhalten von OIT aus den Mikropartikeln deutlich reduzieren lässt.

Die Erfindung betrifft daher Mikrokapseln, enthaltend
a) zumindest ein Melamin-Formaldehyd Polymer als Kapselmaterial und
b) als Biozid wenigstens
   b1) OIT und
   b2) Propiconazol und/oder 3-lod-2-propinyl-butyl-carbamat (IPBC),
dadurch gekennzeichnet, dass das Gewichtsverhältnis von OIT zur Summe von Propiconazol und/oder IPBC 5 : 1 bis 1 : 5, vorzugsweise von 1 : 1 bis 1 : 5, insbesondere von 1 : 1,5 bis 1 : 3 beträgt.

### Mikrokapsel

Die erfindungsgemäßen Mikrokapseln zeichnen sich vorzugsweise dadurch aus, dass sie eine volumengemittelte Teilchengröße von 0,3 bis 100 µm aufweisen. Bevorzugt weisen die erfindungsgemäßen Mikrokapseln eine volumengemittelte Teilchengröße von 5 bis 80 µm auf. Besonders bevorzugt zeichnen sich die erfindungsgemäßen Mikrokapseln darüber hinaus dadurch aus, dass der D90 Wert, bestimmt über Laserbeugung als volumen-gewichtete Verteilung wie im experimentellen Teil beschrieben, vorzugsweise kleiner als 60 µm ist.

Vorzugsweise haben die Mikropartikel eine sphärische Form. Diese Form weist den Vorteil eines hohen Volumens bei geringer Oberfläche auf, wodurch auftreffendes Wasser eine geringe Benetzungsfläche hat.

### Kapselmaterial a)

Unter dem Begriff Melamin-Formaldehyd-Polymere sind vorzugsweise Harze zu verstehen, bei denen Melamin unter geeigneten Bedingungen mit Formaldehyd polykondensiert worden ist. Zu ihrer Herstellung wird im allgemeinen Melamin mit Formaldehyd in molarem Überschuss umgesetzt.

Das Mikroverkapselungsmaterial der erfindungsgemäßen Mikrokapseln kann zusätzlich auch weitere Aminoplast-Harze enthalten. Unter Aminoplast-Harzen versteht man im Allgemeinen Polykondensationsprodukte aus Carbonyl-Verbindungen mit NH-Gruppen-enthaltenden Verbindungen. Zum Beispiel Melamin-Formaldehyd-Harze, Melamin-Harnstoff-Formaldehyd-Harze oder Melamin-Phenol-Formaldehyd-Harze. Von besonderem Interesse sind in diesem Zusammenhang Melamin-Formaldehyd-Harze welche wassermischbar sind und insbesondere eine hohe bis sehr hohe Reaktivität aufweisen. Besonders bevorzug sind alkylierte Tri- oder Tetra-Ether und ganz besonders bevorzugt methylierte Tri- oder Tetra-Ether. Als weitere mögliche Amino-plast-Harze können dem Melamin-Formaldehyd Polymer beispielsweise Aminoplast-Harze aus einer NH-Gruppen-enthaltenden Verbindung und Acetaldehyd oder Glyoxal zugesetzt werden. Des Weiteren können Urethanharze, Cyanamidharze bzw. Dicyanamidharze, Anilinharze, Sulfonamidharze oder Mischungen dieser Harze zugesetzt sein. Diese Harze und deren Herstellung sind dem Fachmann bekannt.

Bevorzugt können dem Melamin-Formaldehyd Polymer bis zu 50 Gew.-%, bezogen auf das Gesamtgewicht an Kapselmaterial, anderer Aminoplast-Harze zugesetzt werden. Bevorzugt enthält das Kapselmaterial aber mindestens 95 Gew.-% Melamin-Formaldehyd Polymer, besonders bevorzugt mindestens 99 Gew.-% Melamin-Formaldehyd Polymer. Durch den Einschluss des Biozids der Komponente b) in den Mikropartikeln wird dieser bei der Anwendung in technischen Materialien wie bspw. Beschichtungsmassen nur in sehr geringem Umfang freigesetzt. Ferner bleibt das technische Material biozid wirksam, da der Wirkstoff im Material verbleibt, so dass er in entsprechend geringen Konzentrationen eingesetzt werden kann. Im praktischen Gebrauch wird das Biozid nur verlangsamt freigesetzt.

Bevorzugt beträgt das Gewichtsverhältnis von Kapselmaterial a) zu Biozid der Komponente b) 1:4 bis 4:1.

In einer bevorzugten Ausführungsform des erfindungsgemäßen Verfahrens wurde gefunden, dass das Leaching-Verhalten noch weiter verbessert werden kann, sofern man das Kapselmaterial a) gegenüber dem Biozid b) im Unterschuss einsetzt. In einer besonders bevorzugten Ausführungsform des erfindungsgemäßen Verfahrens beträgt das Gewichts-verhältnis von Kapselmaterial a) zu Biozid der Komponente b) 1:4 bis 1:1,5, insbesondere von 1:4 bis 1:2, obwohl man bei reduziertem Kapselwandmaterial eine höhere Freigabe und damit schlechteres Leaching hätte erwarten müssen.

Trotz geringem Materialeinsatz für die Kapselwand konnte für diese Ausführungsform eine reduzierte Freisetzung von OIT beobachtet werden.

### Biozid b)

Zwar ist die Mitverwendung von weiteren Wirkstoffen zusätzlich zum OIT in einem weiten Bereich der WO2008/080963 grundsätzlich erwähnt, die Auswahl möglicher Wirkstoffe erfolgt aber lediglich aus Gründen der gewünschten Wirkungsweise im jeweiligen Anwendungsgebiet. In der vorliegenden Erfindung wirkt sich der Einsatz von OIT in gleicher Menge oder im Unterschuss zur Summe von Propiconazol und/oder IPBC, vorzugsweise in einem Gewichtsverhältnis von OIT zur Summe von Propiconazol und/oder IPBC von 5 : 1 bis 1 : 5, vorzugsweise von 1:1 bis 1:5, insbesondere von 1:1,5 bis 1:3 sehr positiv auf das Leaching Verhalten aus.

In einer bevorzugten Ausführungsform enthält das eingesetzte Biozid der Komponente b) wenigstens b1) OIT und b2) Propiconazol, vorzugsweise ohne IPBC, insbesondere besteht das Biozid der Komponente b) zu mehr als 99 Gew.-%, insbesondere zu 100 Gew.-% aus OIT und Propiconazol.

In einer ebenfalls bevorzugten Ausführungsform enthält das eingesetzte Biozid der Komponente b) wenigstens b1) OIT und b2) IPBC, vorzugsweise ohne Propiconazol, insbesondere besteht das Biozid der Komponente b) zu mehr als 99 Gew.-%, insbesondere zu 100 Gew.-% aus OIT und IPBC.

### Weitere Zusätze c)

Die erfindungsgemäßen Mikrokapseln können zusätzlich weitere Komponenten enthalten. Vorzugweise sind dies Schutzkolloide, insbesondere von der Komponente a) verschiedene wasserlösliche Polymere, ganz besonders bevorzugt Polyacrylate, teilverseiftes Polyvinyl-acetat, Polyvinylalkohol, Polyvinylpyrolidon, Zelluloseether (Tylose), wie beispielsweise Methylzellulose, Hydroxyethylzellulose oder Hydroxypropylmethylzellulose, Stärke, Proteine, Gummi Arabicum, Alginate, Pektine, Gelatine oder Mischungen aus diesen Verbindungen enthalten. Die Schutzkolloide sind vorzugsweise in einer Menge von 0,2 bis 5 Gew.-%, bezogen auf die Mikrokapsel, enthalten. Dabei kann das enthaltende Schutzkolloid sich im Kapselinneren, in der Kapselwand oder außen auf der Kapselwand befinden. Besonders bevorzugt wird als Schutzkolloid Polyacrylat oder eine Mischung aus Gummi Arabicum und Polyacrylat eingesetzt.

### Verfahren zur Herstellung

Von der Erfindung ist weiterhin ein Verfahren zur Herstellung der erfindungsgemäßen Mikrokapseln umfasst, dadurch gekennzeichnet, dass es zumindest folgende Schritte umfasst:
a) Abscheidung von Mikroverkapselungsmaterial enthaltend Melamin-Formaldehyd Polymer auf Biozide der Komponente b) und danach
b) Behandlung der gebildeten Biozid-haltigen Mikrokapsel bei einer Temperatur die wenigstens 5°C, vorzugsweise wenigstens 10°C, insbesondere wenigstens 20°C höher liegt als die Temperatur der Abscheidung in Schritt a).

### Schritt a)

Im dem Verfahren zur Herstellung der erfindungsgemäßen Mikrokapseln können beispiels-weise die Biozide der Komponente b) in Wasser oder in einem mit Wasser nicht mischbaren Lösungsmittel eingesetzt werden, die dann dispergiert werden. Bevorzugt wird bei der Herstellung der erfindungsgemäßen Mikrokapseln eine wässrige Suspension oder Emulsion der Biozide der Komponente b) eingesetzt.

Bevorzugt werden dabei die Biozide der Komponenten b1) und b2) in einer Wasser enthaltenden Vorlage, insbesondere mit wenigstens einem Schutzkolloid der Komponente c), wie es beispielsweise oben beschrieben ist, vorzugsweise einem Polyacrylat und ggf. einem weiteren Schutzkolloid wie Gummi Arabicum vorgelegt. Diese Vorlage wird vorzugsweise auf eine Temperatur von 50 bis 85°C eingestellt, insbesondere von 55 bis 75°C.

Es ist bevorzugt vor der Zugabe der Komponente a) die Vorlage vorzugsweise auf einen pH-Wert im Bereich von 0 bis 6,99, bevorzugt von 1,0 bis 4,0, besonders bevorzugt von 2,50 bis 3,50 und ganz besonders bevorzugt von 2,80 bis 3,20, gemessen bei Standardbedingungen von 20°C, einzustellen.

Zur Einstellung des pH Wertes können sowohl anorganische als auch organische Säuren wie beispielsweise Salzsäure, Schwefelsäure, Phosphorsäure oder Zitronensäure, Oxalsäure, Essigsäure, Ameisensäure, saure Salze oder Mischungen hieraus, verwendet werden.

Zu dieser Vorlage wird das Mikroverkapselungsmaterial, enthaltend Melamin-Formaldehyd Polymer, beispielsweise in Form seiner wässrigen Lösung dann zwecks Abscheidung auf dem Biozid zugegeben. Die Zugabe erfolgt vorzugsweise über einen Zeitraum von 30 Minuten bis 24 Stunden.

Die bevorzugte Zugabe des Mikroverkapselungsmaterials erfolgt in Form seiner wässrigen Lösung, insbesondere mit einem Feststoffgehalt von 20 bis 85 Gew.-%. Der pH-Wert einer solchen Lösung beträgt vorzugsweise 7 bis 11.

Das Verfahren umfasst den Einsatz von Melamin-Formaldehyd Polymeren, die durch Änderung des pH-Wertes auf Verbindungen der Formel (I) abgeschieden und thermisch behandelt werden und so die Mikrokapsel bilden. Die Melamin-Formaldehyd Polymere sind kommerziell erhältlich, beispielsweise Saduren® (BASF AG), Maprenal® (Ineos Melamines), Resimene® (Ineos Melamines), Cymel® (Allnex), Madurit® (Ineos Melamines) Quecodur® (Thor GmbH) oder lassen sich auch aus Melamin und Formaldehyd nach bekannten Methoden, wie beispielsweise in WO 2008/000797 A2 beschrieben, herstellen.

Dem Melamin-Formaldehyd Polymer können auch weitere dem Fachmann bekannte Hilfsstoffe, wie beispielsweise, Schutzkolloide beigefügt werden.

Vor Zugabe des Melamin Formaldehyd Polymers wird vorzugsweise durch eine ausreichend gute Durchmischung und hohe Scherkräfte eine Emulsion erzeugt. Um genügend hohe Scherkräfte zu erzeugen, werden im Allgemeinen Rotor Stator Systeme wie Ultraturrax, Dispermix, Dispermat, Ultraschall, Hochdruckdispergatoren, axial durchströmte Düsenaggregate oder ähnliche dem Fachmann bekannte Systeme verwendet.

Die Zugabe des Melamin Formaldehyd Polymers zur Dispersion, insbesondere Suspension oder Emulsion der Biozide der Komponente b), vorzugsweise in Gegenwart von Schutzkolloiden c) kann beispielsweise unmittelbar oder über einen Zeitraum von wenigstens einer Minute, bevorzugt über einen Zeitraum von 30 Minuten bis 24 Stunden, besonders bevorzugt über einen Zeitraum von 1 bis 24 Stunden und ganz besonders bevorzugt über einen Zeitraum von mindestens 2 bis 6 Stunden erfolgen.

Im erfindungsgemäßen Verfahren zur Herstellung der erfindungsgemäßen Mikrokapseln werden die bevorzugt eingesetzten Scherkräfte im Laufe der Polymer-Zugabe vorzugsweise reduziert. Ohne sich in irgendeiner Form wissenschaftlich festlegen zu wollen, wird vermutet, dass die für die Aufrechterhaltung der Emulsion bevorzugten hohen Scherkräfte die Bildung einer ausreichend dicken Polymerschicht erschweren. Zeitpunkt und Maß der Reduktion variieren abhängig von dem gewählten Rotor Stator System.

Im erfindungsgemäßen Verfahren zur Herstellung der erfindungsgemäßen Mikrokapseln kann die Abscheidungstemperatur des Melamin-Formaldehyd Polymers in einem breiten Bereich variiert werden, bevorzugt findet die Abscheidung bei einer Temperatur von 40 bis 87°C, bevorzugt in einem Bereich von 59 bis 85°C und besonders bevorzugt in einem Bereich von 69 bis 83°C statt.

Alternativ kann das vorzugsweise in Wasser gelöste Melamin-Formaldehyd Polymer auch erst der Vorlage zugegeben werden und erst danach durch Einstellen eines sauren pH-Wertes die Abscheidung auf der Oberfläche des Biozids der Komponente b) erfolgen. Geeignete Bedingungen für die Abscheidung des Mikroverkapselungsmaterials auf dem Biozid der Komponente b) können in wenigen Vorversuchen ohne großen Aufwand experimentell bestimmt werden.

### Schritt b)

Im erfindungsgemäßen Verfahren zur Herstellung der erfindungsgemäßen Mikrokapseln erfolgt eine anschließende thermische Behandlung. Ohne sich in irgendeiner Form wissenschaftlich festlegen zu wollen, wird vermutet, dass durch die thermische Behandlung noch nicht vernetzte oder noch nicht polymerisierte Gruppen vernetzt oder polymerisiert werden. Nach der Abscheidung des Melamin-Formaldehyd Polymers kann bei Temperaturen die niedriger, gleich oder höher sind als die Abscheidungstemperatur eine Behandlung des abgeschiedenen Melamin-Formaldehyd Polymers erfolgen. Bevorzugt erfolgt die Behandlung unter Rühren. Die erfindungsgemäßen Mikrokapseln können in einer alternativen Ausführungsform auch chemisch behandelt werden.

Weiterhin bevorzugt findet die thermische Behandlung der erfindungsgemäßen Mikrokapseln bei einer Temperatur, die nicht höher als 97°C ist, vorzugsweise bei 50 bis 95°C, insbesondere, bei 70 bis 95°C, ganz besonders bevorzugt bei 80 bis 90°C statt.

Hinsichtlich der bevorzugten Dauer der thermischen Nachbehandlung ist diese temperatur-bedingt unterschiedlich. Sie kann beispielsweise von 1 bis 48 Stunden, vorzugsweise von 4 bis 24 Stunden, vorzugsweise von 8 bis 20 Stunden dauern.

Im erfindungsgemäßen Verfahren zur Herstellung der erfindungsgemäßen Mikrokapseln ist es ebenfalls möglich, eine Suspension oder Emulsion der Biozide der Komponente b) und des Melamin-Formaldehyd Polymers mit gegebenenfalls Hilfsstoffen, wie beispielsweise Schutzkolloiden oder aber auch weiteren Aminoplast-Harzen, vorzulegen, auf die Abscheidungstemperatur aufzuheizen und erst dann den oben genannten pH Wert von 0 bis 6,99 einzustellen, so dass das Harz ausfällt.

Das erfindungsgemäße Verfahren zur Herstellung der erfindungsgemäßen Mikrokapseln kann bei beliebigen Drücken durchgeführt werden. Bevorzugt wird das erfindungsgemäße Verfahren zur Herstellung der erfindungsgemäßen Mikrokapseln bei Umgebungsdruck durchgeführt.

Die erfindungsgemäßen Mikrokapseln können beispielsweise in dem Fachmann bekannter Art durch Zugabe von Hilfsstoffen, Gebindekonservierung und Verdickern ohne Aufarbeitung in eine Suspension überführt werden. Bevorzugt ist es dabei, den pH Wert der resultierenden wässrigen Formulierung auf pH 7 bis 10 einzustellen, vorzugsweise von 8 bis 9.

In einer alternativen Ausführungsform lassen sich die erfindungsgemäßen Mikrokapseln nach der Herstellung beispielsweise durch Filtration isolieren und bei Raumtemperatur oder durch leichtes Erwärmen trocknen. Es besteht aber auch die Möglichkeit das Mikroverkapselungsmaterial durch Sprühtrocknung oder Gefriertrocknung zu trocknen und zu isolieren. Bevorzugt werden die erfindungsgemäßen Mikrokapseln durch Filtration abgetrennt und dann getrocknet.

Die erfindungsgemäßen Mikrokapseln eignen sich insbesondere für den Einsatz in oder als biozide, insbesondere fungizide Mittel. Daher umfasst die Erfindung auch biozide Mittel, enthaltend erfindungsgemäße Mikrokapseln sowie die Verwendung der erfindungsgemäßen Mikrokapseln als biozides Mittel oder in bioziden Mitteln.

Die erfindungsgemäßen Mikrokapseln zeichnen sich durch hohe Wirksamkeit und ihr breites Wirkungsspektrum gegen Pilze aus.

Es seien beispielsweise Mikroorganismen der folgenden Gattung genannt:
*Alternaria sp.,* wie *A. tenuis,*
*Aspergillus sp.,* wie *A. niger, A. ustus*
*Chaetomium sp.,* wie C. *globosum,*
Coniophora, wie C. puetana,
Lentinus sp, wie L. tigrinus,
*Penicillium sp,* wie *P. glaucum, P. citrinum, P. brevicaule*
Polyporus sp., wie P. versicolor,
*Aureobasidium sp.,* wie *A. pullulans,*
Sclerophoma sp., wie S. pityophila,
*Trichoderma sp.,* wie *T. viride,*
*Cladosporium sp.,* wie C. *herbarum,*
*Stachybotrys sp.,* wie *S. chartarum*
*Paecilomyces sp.,* wie *P. variotii*
*Geotrichum sp.,* wie *G*. *candidum*
*Fusarium sp.,* wie *F. oxysporum, F. solani.*

Die erfindungsgemäßen bioziden Mittel können in beliebiger Formulierung vorliegen wie beispielsweise in Form von Dispersionen, Pulvern oder Granulaten.

Grundsätzlich sind bevorzugte Formulierungsarten im Wesentlichen abhängig vom Einsatzzweck und den dafür geforderten physikalischen Eigenschaften. Da diese jedoch bekannt sind, ist es für den Fachmann gängige Praxis, in wenigen Versuchen eine bevorzugte Formulierungsart zu ermitteln.

Die Formulierungen können zusätzlich auch noch weitere Stoffe, wie Stabilisatoren, Gebindekonservierungsmittel und weitere Biozide, wie beispielsweise Fungizide, Algizide, Insektizide, Akarizide, Nematizide, Radizide und Herbizide oder Mischungen davon, bevorzugt Fungizide oder Algizide oder Mischungen davon, ganz bevorzugt Algizide enthalten.

Die bioziden Mittel können neben den erfindungsgemäßen Mikrokapseln gegebenenfalls weiterhin verschiedene Hilfsstoffe enthalten. Für die nachstehend genannten Hilfsstoffe besteht jeweils unabhängig voneinander auch die Möglichkeit, dass sie nicht enthalten sind. Mögliche Hilfsstoffe sind beispielsweise:
- Grenzflächenaktive Stoffe, wie beispielsweise Tenside. Tenside können beispielsweise nichtionische, kationische und amphotere Tenside, vorzugsweise anionische Tenside sein. Anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkyl-ethercarboxylate, Alpha-Olefinsulfonate, insbesondere die Alkali- und Erdalkali-metallsalze, zum Beispiel Natrium-, Kalium-, Magnesium-, Calcium-, sowie Ammonium- und Triethanolamin-Salze. Die Alkylethersulfate, Alkyletherphosphate und Alkylethercarboxylate können jeweils beispielsweise von 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natrium-laurylethersulfat, Ammoniumlaurylethersulfat, Natriumlaurylsarkosinat, Natriumoleyl-succinat, Ammoniumlaurylsulfosuccinat, Natriumdodecylbenzolsulfonat, Triethanol-amindodecyl-benzolsulfonat. Die erfindungsgemäßen bioziden Mittel können dabei beispielsweise von 0,01 bis 10 Gew.-%, vorzugsweise von 0,2 bis 8 Gew.-%, besonders bevorzugt von 0,3 bis 5 Gew.-% und ganz besonders bevorzugt von 0,5 bis 3 Gew.-% an grenzflächenaktiven Stoffen enthalten.
- Entschäumer. Als Entschäumer werden im Allgemeinen grenzflächenaktive Stoffe eingesetzt, die in der tensidischen Lösung nur schwach löslich sind. Bevorzugte Entschäumer sind solche, die sich von natürlichen Fetten und Ölen, Petroleum-Derivaten oder Siliconölen ableiten.
- Benetzungsmittel, wie beispielsweise Alkali-, Erdalkali-, Ammoniumsalze von aromatischen Sulfonsäuren, zum Beispiel Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol- oder Tributylphenylpolyglycolether, Trissterylphenyletherethoxylate, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose. Die erfindungsgemäßen bioziden Mittel können dabei beispielsweise von 0,01 bis 8 Gew.-%, vorzugsweise von 0,2 bis 6 Gew.-%, besonders bevorzugt von 0,3 bis 5 Gew.-% und ganz besonders bevorzugt von 0,5 bis 3 Gew.-% an Benetzungsmitteln enthalten.
- Emulgatoren, wie beispielsweise Natrium-, Kalium-und Ammoniumsalze von gradkettigen aliphatischen Carbonsäuren der Kettenlänge C₁₀-C₂₀, Natriumhydroxyoctadecansulfonat, Natrium-, Kalium-und Ammoniumsalze von Hydroxyfettsäuren der Kettenlänge C₁₀-C₂₀ und deren Sulfierungs- bzw. Acetylierungsprodukte, Alkylsulfate, auch als Triethanolaminsalze, Alkyl-(C₁₀-C₂₀)-sulfonate, Alkyl-(C₁₀-C₂₀)-arylsulfonate, Dimethyldialkyl-(C₈-C₁₈)-ammoniumchlorid, Acyl-, Alkyl-, Oleyl-und Alkylaryloxethylate und ihre Sulfierungsprodukte, Alkalisalze der Sulfo-bernsteinsäureester mit aliphatischen gesättigten einwertigen Alkoholen der Kettenlänge C₄-C₁₆, Sulfobernsteinsäure-4-Ester mit Polyethylenglykolethern von ein-wertigen aliphatischen Alkoholen der Kettenlänge C₁₀-C₁₂ (Di-Natriumsalz), Sulfobernsteinsäure-4-Ester mit Polyethylenglykolnonylphenylether (Di-Natriumsalz), Sulfobernsteinsäure biscyclohexylester (Natriumsalz), Ligninsulfonsäure sowie deren Calcium-, Magnesium-, Natrium- und Ammoniumsalze, Polyoxyethylen-sorbitan-monooleat mit 20 Ethylenoxidgruppen, Harzsäuren, hydrierte und dehydrierte Harz-säuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol. Die erfindungsgemäßen bioziden Mittel können dabei beispiels-weise von 0,01 bis 15 Gew.-%, vorzugsweise von 0,02 bis 8 Gew.-%, besonders bevorzugt von 0,05 bis 6 Gew.-% und ganz besonders bevorzugt von 0,1 bis 5 Gew.-% an Emulgatoren enthalten.
- Dispergiermittel, wie beispielsweise Alkylphenolpolyglycolether. Die erfindungsgemäßen bioziden Mittel können dabei beispielsweise von 0,01 bis 15 Gew.-%, vor-zugsweise von 0,02 bis 8 Gew.-%, besonders bevorzugt von 0,05 bis 6 Gew.- % und ganz besonders bevorzugt von 0,1 bis 5 Gew.-% an Dispergiermitteln enthalten.
- Stabilisatoren, wie beispielsweise Cellulose und Cellulosederivate. Die erfindungsgemäßen bioziden Mittel können dabei beispielsweise von 0,01 bis 6 Gew.-%, vorzugsweise von 0,01 bis 3 Gew.-%, besonders bevorzugt von 0,01 bis 2 Gew.-% und ganz besonders bevorzugt von 0,01 bis 1 Gew.-% an Stabilisatoren enthalten.
- Stabilisatoren, wie beispielsweise Antioxidantien, Radikalfänger oder UV-Absorber.
- Haftmittel oder Schutzkolloide, wie beispielsweise Carboxymethylcellulose, natürliche und synthetische pulvrige, körnige oder latexförmige Polymere, wie Gummi Arabicum, Polyvinylalkohol, Polyvinylacetat, sowie natürliche Phospholipide, wie Kephaline und Lecithine und synthetische Phospholipid sowie Paraffinöle. Die erfindungsgemäßen bioziden Mittel können dabei beispielsweise von 0,01 bis 8 Gew.-%, vorzugsweise von 0,05 bis 4 Gew.-%, besonders bevorzugt von 0,2 bis 3 Gew.-% und ganz besonders bevorzugt von 0,2 bis 2 Gew.-% an Haftmitteln enthalten.
- Spreitmittel, wie beispielsweise Isopropylmyristat Polyoxyethylennonylphenylether und Polyoxyethylenlaurylphenylether. Die erfindungsgemäßen bioziden Mittel können dabei beispielsweise von 0,01 bis 20 Gew.-%, vorzugsweise von 0,1 bis 10 Gew.-%, besonders bevorzugt von 0,1 bis 5 Gew.-% und ganz besonders bevorzugt von 0,1 bis 2 Gew.-% an Spreitmitteln enthalten.
- Duftstoffe und Farbstoffe, wie beispielsweise anorganische Pigmente, zum Beispiel Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink. Die erfindungsgemäßen bioziden Mittel können dabei beispielsweise jeweils von 0,001 bis 4 Gew.-%, vorzugsweise von 0,01 bis 1 Gew.-%, besonders bevorzugt von 0,01 bis 0,8 Gew.-% an Duftstoffen und Farbstoffen enthalten.
- Puffersubstanzen, Puffersysteme oder pH-Wert-Regulatoren. Die erfindungsgemäßen bioziden Mittel können dabei beispielsweise jeweils von 0,01 bis 10 Gew.-%, vorzugsweise von 0,1 bis 5 Gew.-% an Puffersubstanzen, Puffersystemen oder pH-Wert-Regulatoren enthalten.
- Verdickungsmittel, wie beispielweise Polysaccharide, Xanthan Gum, Natrium- oder Magnesium Silicate, Heteropolysaccharide, Alginate, Carboxymethylcellulose, Gummi Arabicum oder Polyacrylsäuren, bevorzugt Xanthan Gum.
- Entstaubungsmittel sind beispielsweise Polyglykole und Polyglykolether. Die erfindungsgemäßen bioziden Mittel können dabei beispielsweise jeweils von 0,01 bis 2 Gew.-%, vorzugsweise von 0,05 bis 1 Gew.-%, besonders bevorzugt von 0,1 bis 0,5 Gew.-% an Entstaubungsmitteln enthalten.
- Als Fließmittel oder Trennmittel können beispielsweise hochdisperse Kieselsäure oder Mg-Salze von Fettsäuren eingesetzt werden. Die erfindungsgemäßen bioziden Mittel können dabei zur Verbesserung der Fließfähigkeit der Feststoffe jeweils von 0,01 bis 5 Gew.-%, vorzugsweise von 0,05 bis 3 Gew.-%, besonders bevorzugt von 0,1 bis 2 Gew.-% an Fließmittel enthalten.
- Gebindekonservierungsmittel sind beispielsweise Biozide, Bakterizide und Fungizide. Die erfindungsgemäßen bioziden Mittel können dabei beispielsweise jeweils von 0,01 bis 2 Gew.-%, vorzugsweise von 0,05 bis 1 Gew.-% an Gebindekonservierungsmittel enthalten.
- Frostschutzmittel sind beispielsweise Harnstoff, Harnstoff-Derivate und Glykole. Die erfindungsgemäßen bioziden Mittel können dabei beispielsweise jeweils von 0,01 bis 10 Gew.-%, vorzugsweise von 0,5 bis 5 Gew.-%, an Frostschutzmittel enthalten.

Der Gesamtgehalt der oben genannten Hilfsmittel in den bioziden Mitteln beträgt beispielsweise von 0,001 bis 20 Gew.-%, bevorzugt von 0,1 bis 15 Gew.-% und besonders bevorzugt von 0,1 bis 10 Gew.-%.

Als bevorzugte biozide Mittel lassen sich feste Formulierungen nennen, wie beispielsweise Pulvermischungen oder wasserdispergierbare Granulate (WG), diese können neben den Mikrokapseln auch noch feste Hilfsmittel wie zum Beispiel natürliche Gesteinsmehle, wie Kaoline, Tonerden, Talkum, Marmor, Kreide, Quarz, Attapulgit, Montmorillonit oder Diatomeenerde oder synthetische anorganische Stoffe, wie hochdisperse Kieselsäure, Aluminiumoxid und Silikate enthalten oder Mischungen davon.

Es lassen sich so erfindungsgemäß einerseits geringere Wirkstoffmengen zur Ausrüstung einsetzen, andererseits erheblich längere Wirkdauern erzielen.

Die festen Formulierungen können in an sich bekannter Weise beispielsweise durch innige Vermischung der erfindungsgemäßen Mikrokapseln mit den festen Hilfsmitteln erhalten werden. Weiterhin können die festen Formulierungen durch Trocknung, beispielsweise Sprühtrocknung, einer flüssigen Formulierung erhalten werden.

Bevorzugte feste Formulierungen enthalten beispielsweise von 10 bis 100 Gew.-% der erfindungsgemäßen Mikrokapseln, vorzugsweise von 15 bis 98 Gew.-%.

Als ebenfalls bevorzugte biozide Mittel lassen sich flüssige Formulierungen nennen, beispielsweise Dispersionen, die auch in Form von Gelen oder Pasten vorliegen können.

Bevorzugte flüssige Formulierungen sind bevorzugt wässrige Dispersionen.

Die flüssigen Formulierungen wie insbesondere die Dispersionen lassen sich in an sich bekannter Weise ohne Isolierung der Mikrokapseln beispielsweise durch Zugabe gängiger Formulierhilfsmittel herstellen. Bevorzugt ist es dabei, den pH Wert der resultierenden wässrigen Formulierung auf pH 7 bis 10 einzustellen, vorzugsweise von 8 bis 9. Alternativ lassen sie sich in an sich bekannter Weise beispielsweise herstellen, indem man die mikroverkapselten Wirkstoffe und die weiteren Stoffe, die in der flüssigen Formulierung enthalten sein sollen, gemeinsam mittels eines Rührers innig miteinander vermischt.

Die flüssigen Formulierungen enthalten im Allgemeinen von 2 bis 95 Gew.-%, vorzugsweise von 5 bis 75 Gew.-% und ganz besonders bevorzugt von 5 bis 50 Gew.-% der erfindungsgemäßen Mikrokapseln. Ebenfalls bevorzugt besitzen sie einen pH Wert von pH 7 bis 10.

Die Erfindung betrifft weiterhin die Verwendung der erfindungsgemäßen Mikrokapseln oder der erfindungsgemäßen bioziden Mittel zum Schutz von technischen Materialien, sowie technische Materialien, enthaltend die erfindungsgemäßen bioziden Mittel oder erfindungs-gemäßen Mikrokapseln.

Technische Materialien sind beispielsweise Baumaterialien, Holz, Holzwerkstoffe, Holz-Plastik-Verbundstoffe, Dichtungsmassen, Fugendichtungen, Kunststoffe, Folien, Steinplatten, Textilien wie zum Beispiel Planen und Zelte, Textilverbundstoffe, Beschichtungsmassen wie zum Beispiel Farben, Wandfarben, Fassadenfarben, Außenfarben, Innenfarben, Dispersionsfarben, Silikatfarben, Lacke, Beton, Zement, Mörtel oder Putze, vorzugsweise silicatgebundene, mineralische, harzgebundene oder silikonharzgebundene Putze, Kunstharzputzen, Holzbeschichtungen, Holzlasuren, Betonbeschichtungen, Dachsteinbeschichtungen, Dichtungsmassen oder Textilbeschichtungen. Weitere Anwendungen für erfindungsgemäße Beschichtungsmassen finden sich neben der Bauindustrie auch in Medizintechnik, Textilindustrie, Gummiindustrie, Dichtungsindustrie, Agrarindustrie und Labortechnik.

Der Vorteil der Erfindung ist darin zu sehen, dass die erfindungsgemäßen Mikrokapseln ein überlegenes, weil vermindertes Auswaschungsverhalten zeigen, vorzugsweise sogar bei gleichzeitig geringem Materialeinsatz für das Kapselmaterial. Es lassen sich so erfindungs-gemäß sowohl geringere Stoffmengen zum Schutz von Beschichtungsmassen einsetzen, als auch erheblich längere Wirkdauern erzielen.

Die folgenden Beispiele erläutern die vorliegende Erfindung.

### Beispiele

### Allgemeines

### Durchführung Leaching-Test für OIT enthaltende Mikrokapseln:

In einem 100 ml Schraubdeckelglas wurde eine Menge der Formulierung eingewogen, die 500 ppm OIT (bezogen auf 100 g) enthält, und mit Wasser auf 100 g aufgefüllt. Das Schraubdeckelglas wurde verschlossen und die Probe wurde auf einem Kreisschüttler bei 250 Umdrehungen pro Minute und 20°C geschüttelt. Nach 24 Stunden wurde 1 ml Probe mit einer Pipette entnommen und in ein Reaktionsgefäß überführt. Die Probe wurde 6 Minuten bei 14.000 Umdrehungen pro Minute zentrifugiert und der Überstand mittels High-Performance-Liquid-Chromatography analysiert.

### Herstellung Mikrokapsel:

Die Herstellung der Mikrokapseln erfolgt in einem 1000 ml-Planschlifftopf mit Impellerrührer (400 - 600 U/min) und Ultraturrax (16000-16200 U/min zum Emulgieren und zu Beginn der Maprenal-Zugabe dann 0 U/min).

In den folgenden Beispielen, wurden nachfolgende Substanzen eingesetzt:

| **Bezeichnung** | **Menge** |
|---|---|
| Gummi Arabicum-Lösung (4 Gew.-%) | 40,5 g |
| Coadis™ BR3 (50 Gew.-% in H₂O) (Dispersionsreagenz; wässrige Polyacrylatsalz-Lösung der Firma Coatex) | 8,1 g |
| Wasser | 536 g |
| SILOFOAM®SRE (Silikon-Antischaumemulsion Entschäumer der Firma Wacker) | 3,2 g |
| Citronensäure | zur Einstellung von pH 2,99 |
| Wirkstoff | 161 g |
| Maprenal® MF 921w/85WA -Wasser-Lösung (1:1) (Melamin-Formaldehyd Crosslinker Harz der Firma INEOS Melamines) mit einem pH Wert von 8 | 161 g |

### Beispiele 1 bis 7

### Durchführung:

Die Herstellung der Wirkstoffkapseln für die Beispiele 1 bis 7 (Propi/OIT in verschiedenen Verhältnissen. Wirkstoff:Harz 2,4:1) erfolgt folgendermaßen:
Gummi Arabicum-Lösung, Coadis® BR3-Lösung und Wasser werden zusammen mit Entschäumer Silfoam®SRE vorgelegt. Durch Zugabe von Citronensäure-Lösung (50 Gew.%) wird der pH-Wert auf 2,99 gestellt. Anschließend wird der Ansatz auf 60°C erhitzt, während die Wirkstoffe Propiconazol und OIT zugegeben und mit Hilfe eines Ultraturrax emulgiert werden. Sobald der Ansatz 60°C erreicht hat wird die Maprenal®-Wasser-Lösung (1:1) über einen Zeitraum von 2-3 Stunden zugetropft. Nachdem 10% Maprenal®-Wasser-Lösung zugetropft wurden, wird der Ansatz nur noch mit dem Impellerrührer gerührt. Nach vollständiger Zugabe wird der Ansatz wird auf 90°C erhitzt und über Nacht gerührt.

Formulierung: Nach Abkühlen auf Raumtemperatur wird der pH-Wert durch Zugabe von Natriumhydroxid-Lösung (50 Gew.-%) auf pH 8 eingestellt. Es werden 0,2% Soprophor® S25, 0,2% Preventol® BM5, 5% Harnstoff und Rhodopol-G® zugegeben, sodass eine homogene Formulierung entsteht.

**Vergleichsbeispiel A** (nur OIT; Wirkstoff:Harz 2,4:1):Gummi Arabicum-Lösung, Coadis® BR3-Lösung und Wasser werden zusammen mit Entschäumer Silfoam®SRE vorgelegt. Durch Zugabe von Citronensäure-Lösung (50 Gew.-%) wird der pH-Wert auf 2,99 gestellt. Der Ansatz wird in einen 1L-Planschliffbecher überführt und mit dem Aufheizen auf 60°C begonnen. Es wird OIT zugegeben und mit Hilfe eines Ultraturrax emulgiert. Sobald 60°C erreicht sind wird die Maprenal®-Wasser-Lösung (1:1) über einen Zeitraum von 2-3 Stunden zugetropft. Nachdem 10% Maprenal®-Wasser-Lösung zugetropft wurden, wird der Ansatz nur noch mit dem Impellerrührer gerührt. Nach vollständiger Zugabe wird der Ansatz wird auf 90°C erhitzt und über Nacht gerührt.

Formulierung: Nach Abkühlen auf Raumtemperatur wird der pH-Wert durch Zugabe von Natriumhydroxid-Lösung (50 Gew.-%) auf pH 8 eingestellt. Es werden 0,2% Soprophor® S25, 0,2% Preventol® BM5, 5% Harnstoff und Rhodopol-G® zugegeben, sodass eine homogene Formulierung entsteht.

**Tabelle 1:**

| Freisetzung von OIT aus Mikrokapseln nach 24 Stunden Leaching | | |
|---|---|---|
| **Beispiel** | **Verhältnis Propiconazol OIT** | **OIT [ppm]** |
| 1 | 5:1 | 27,3 ppm |
| 2 | 4:1 | 23,5 ppm |
| 3 | 3:1 | 21,0 ppm |
| 4 | 2:1 | 16,0 ppm |
| 5 | 1:2 | 56,9 ppm |
| 6 | 1:5 | 63,6 ppm |
| 7 | 1:10 | 116,7 ppm |

**Tabelle 2:**

| Freisetzung von OIT aus Mikrokapseln nach 24 Stunden Leaching | |
|---|---|
| **Vergleichsbeispiel** | **OIT [ppm]** |
| A | 148 ppm |

Die Herstellung der Wirkstoffkapseln für die Beispiele 8 bis 9 (IPBC/OIT in verschiedenen Verhältnissen. Wirkstoff:Harz 2,4:1) erfolgt folgendermaßen:
Gummi Arabicum-Lösung, Coadis® BR3-Lösung und Wasser werden zusammen mit Entschäumer Silfoam®SRE vorgelegt. Durch Zugabe von Citronensäure-Lösung (50 Gew.-%) wird der pH-Wert auf 2,99 gestellt. Der Ansatz wird auf 70°C erhitzt. Nachdem 70°C erreicht sind werden IPBC und OIT zugegeben und bei 10600 U/min mittels Ultraturrax emulgiert. Anschließend wird die Maprenal®-Wasser-Lösung (1:1) über einen Zeitraum von 2-3 Stunden zugetropft. Nachdem 10% Maprenal®-Wasser-Lösung zugetropft wurden, wird der Ansatz nur noch mit dem Impellerrührer gerührt. Nach vollständiger Zugabe wird der Ansatz wird auf 80°C erhitzt und über Nacht gerührt.

Formulierung: Nach Abkühlen auf Raumtemperatur wird der pH-Wert durch Zugabe von Natriumhydroxid-Lösung (50 Gew.-%) auf pH 8 eingestellt. Es werden 0,2% Soprophor® S25, 0,2% Preventol® BM5, 5% Harnstoff und Rhodopol-G® zugegeben, sodass eine homogene Formulierung entsteht.

**Tabelle 3:**

| Freisetzung von OIT aus Mikrokapseln nach 24 Stunden Leaching | | |
|---|---|---|
| **Beispiel** | **Verhältnis IPBC: OIT** | **OIT [ppm]** |
| 8 | 3:1 | 16,1 ppm |
| 9 | 2:1 | 17,1 ppm |

### Beispiel 10 - mehr Harz (Propi/OIT 2:1; Harz:Wirkstoff 1:1)

Zur Herstellung der Mikrokapseln in dem folgenden Beispiel, wurden nachfolgende Substanzen eingesetzt:

| **Bezeichnung** | **Menge** |
|---|---|
| Gummi Arabicum-Lösung (4 Gew.-%) | 40,5 g |
| Coadis™ BR3 (50 Gew.-% in H₂O) (Dispersionsreagenz; wässrige Polyacrylatsalz-Lösung der Firma Coatex) | 8,1 g |
| Wasser | 548 g |
| SILOFOAM®SRE (Silikon-Antischaumemulsion Entschäumer der Firma Wacker) | 3,2 g |
| Citronensäure | zur Einstellung von pH 2,99 |
| Propiconazol | 107,3 g |
| OIT | 53,7 g |
| Maprenal® MF 921w/85WA -Lösung (189 g Maprenal + 161 g Wasser) (Melamin-Formaldehyd Crosslinker Harz der Firma INEOS Melamines) mit einem pH Wert von 8 | 350 g |

### Durchführung:

Gummi Arabicum-Lösung, Coadis® BR3-Lösung und Wasser werden zusammen mit Entschäumer Silfoam®SRE vorgelegt. Durch Zugabe von Citronensäure-Lösung (50 Gew.- %) wird der pH-Wert auf 2,99 gestellt. Anschließend wird OIT zugegeben und mit Hilfe eines Ultraturrax (16200 U/min) emulgiert. Der Ansatz auf 60°C erhitzt. Nach Zugabe von Propiconazol wird die Maprenal®-Wasser-Lösung (1:1) über einen Zeitraum von 2-3 Stunden zugetropft. Nachdem 10% Maprenal®-Wasser-Lösung zugetropft wurden, wird der Ansatz nur noch mit dem Impellerrührer (500 U/min) gerührt. Nach vollständiger Zugabe wird der Ansatz auf 90°C erhitzt und über Nacht gerührt.

Formulierung: Nach Abkühlen auf Raumtemperatur wird der pH-Wert durch Zugabe von Natriumhydroxid-Lösung (50 Gew.-%) auf pH 8 eingestellt. Es werden 0,2% Soprophor® S25, 0,2% Preventol® BM5, 5% Harnstoff und Rhodopol-G® zugegeben, sodass eine homogene Formulierung entsteht.

**Tabelle 4:**

| Freisetzung von OIT aus Mikrokapseln mit unterschiedlichem Harz/Wirkstoff-Verhältnis nach 24 Stunden Leaching. | | | |
|---|---|---|---|
| **Beispiel** | **Verhältnis Propiconazol: OIT** | **Verhältnis Harz:Wirkstoff** | **OIT [ppm]** |
| 4 | 2:1 | 1:2,4 | 16,0 ppm |
| 10 | 2:1 | 1:1 | 27,8 ppm |

### Ergebnisse / Schlussfolgerungen:

Vergleich OIT zu Propi/OIT-Kapseln:

Mit Hilfe des beschriebenen Verfahrens konnten OIT-Kapseln hergestellt werden, die zu einer verlangsamten Freisetzung des Wirkstoffs führen (Vergleichsbeispiel A). Überraschenderweise konnte die Freisetzung von OIT durch den Zusatz von Propiconazol um ein vielfaches verlangsamt werden (Beispiele 1 bis 7). Hier zeigte sich, dass es ein bevorzugtes Verhältnis von Propiconazol zu OIT gibt, bei dem dieser Effekt besonders ausgeprägt ist. Wird der Anteil an Propiconazol weiter erhöht, werden die Kapseln für OIT wieder durchlässiger.

### Variation Wandmaterial zu Wirkstoff:

In der WO2008/080963 ist als einziges Verhältnis von Wandmaterial zu OIT das Verhältnis 1:1 beschrieben. Der Fachmann würde vermuten, dass die Verwendung von mehr Wandmaterial (Verhältnis Wandmaterial zu Wirkstoff von größer 1:1) zu einer dickeren Harzschicht führt, womit eine dichtere Kapsel entsteht als mit weniger Wandmaterial (Verhältnis Wandmaterial zu Wirkstoff von 1:2,4). Überraschender Weise ist dies nicht der Fall. Wie die Beispiele 4 und 10 bei den Propiconazol/OIT-Verkapselungen zeigen, haben die Kapseln bei denen mehr Harz eingesetzt wurde, eine schlechtere Rückhaltung von OIT als die mit weniger Harz.

## Patentansprüche

1. Mikrokapseln, enthaltend
a) zumindest ein Melamin-Formaldehyd Polymer als Kapselmaterial und
b) als Biozid wenigstens
b1) OIT und
b2) Propiconazol und/oder 3-lod-2-propinyl-butyl-carbamat (IPBC),
**dadurch gekennzeichnet, dass** das Gewichtsverhältnis von OIT zur Summe von Propiconazol und/oder IPBC 5 : 1 bis 1 : 5, vorzugsweise von 1 : 1 bis 1 : 5, insbesondere von 1 : 1,5 bis 1 : 3 beträgt.

2. Mikrokapseln nach Anspruch 1, **dadurch gekennzeichnet, dass** das Gewichtsverhältnis von Kapselmaterial a) zu Biozid der Komponente b) 1 : 4 bis 4 : 1 beträgt.

3. Mikrokapseln nach wenigstens einem der Ansprüche 1 bis 2, **dadurch gekennzeichnet, dass** das Gewichtsverhältnis von Kapselmaterial a) zu Biozid der Komponente b) 1 : 4 bis 1 : 1,5, insbesondere von 1 : 4 bis 1 : 2, beträgt.

4. Mikrokapseln nach wenigstens einem der Ansprüche 1 bis 3, enthaltend als Biozid der Komponente b) wenigstens b1) OIT und b2) Propiconazol, vorzugsweise ohne IPBC.

5. Mikrokapseln nach wenigstens einem der Ansprüche 1 bis 4, **dadurch gekennzeichnet, dass** das Biozid der Komponente b) zu mehr als 99 Gew.-%, aus OIT und Propiconazol besteht.

6. Mikrokapseln nach wenigstens einem der Ansprüche 1 bis 3, enthaltend als Biozid der Komponente b) wenigstens b1) OIT und b2) IPBC, vorzugsweise ohne Propiconazol.

7. Mikrokapseln nach wenigstens einem der Ansprüche 1 bis 3 oder 6, **dadurch gekennzeichnet, dass** das Biozid der Komponente b) zu mehr als 99 Gew.-%, aus OIT und IPBC besteht.

8. Mikrokapseln nach wenigstens einem der Ansprüche 1 bis 3, **dadurch gekennzeichnet, dass** die Mikrokapseln eine volumengemittelte Teilchengröße von 0,3 bis 100 µm, bevorzugt von 5 bis 80 µm aufweisen.

9. Mikrokapseln nach wenigstens einem der Ansprüche 1 bis 8, **dadurch gekennzeichnet, dass** das Kapselmaterial zusätzlich Aminoplast-Harze, bevorzugt mit Harnstoff und/oder Phenol modifizierte Melamin-Formaldehyd-Harze, Aminoplast-Harze aus einer NH-Gruppen enthaltenden Verbindung und Acetaldehyd oder Glyoxal, Urethanharze, Cyanamidharze beziehungsweise Dicyanamidharze, Anilinharze, Sulfonamidharze oder Mischungen dieser Harze enthält.

10. Mikrokapseln nach wenigstens einem der Ansprüche 1 bis 8, **dadurch gekennzeichnet, dass** sie wenigstens ein Schutzkolloid, insbesondere wenigstens ein von der Komponente a) verschiedenes wasserlösliches Polymer enthält.

11. Verfahren zur Herstellung von Mikrokapseln nach wenigstens einem der Ansprüche 1 bis 10, **dadurch gekennzeichnet, dass** es zumindest folgende Schritte umfasst:
a) Abscheidung von Mikroverkapselungsmaterial enthaltend Melamin-Formaldehyd Polymer auf Biozide der Komponente b) und danach
b) Behandlung der gebildeten Biozid-haltigen Mikrokapsel bei einer Temperatur, die wenigstens 5°C, vorzugsweise wenigstens 10°C, insbesondere wenigstens 20°C höher liegt, als die Temperatur der Abscheidung in Schritt a).

12. Biozide Mittel enthaltend Mikrokapseln nach einem der Ansprüche 1 bis 10.

13. Nicht-therapeutische Verwendung der Mikrokapseln nach einem der Ansprüche 1 bis 10 als biozides Mittel oder in bioziden Mitteln.

14. Technische Materialien, enthaltend die bioziden Mittel nach Anspruch 12 oder Mikrokapseln nach einem der Ansprüche 1 bis 10.

15. Verwendung von Mikrokapseln nach einem der Ansprüche 1 bis 10 oder der bioziden Mittel nach Anspruch 12 zum Schutz von technischen Materialien.

## Claims

1. Microcapsules comprising
a) at least one melamine-formaldehyde polymer as capsule material and
b) as biocide at least
b1) OIT and
b2) propiconazole and/or 3-iodo-2-propynyl butylcarbamate (IPBC),
**characterized in that** the weight ratio of OIT to the sum total of propiconazole and/or IPBC is 5:1 to 1:5, preferably from 1:1 to 1:5, in particular from 1:1.5 to 1:3.

2. Microcapsules according to Claim 1, **characterized in that** the weight ratio of capsule material a) to biocide of component b) is 1:4 to 4:1.

3. Microcapsules according to at least one of Claims 1 to 2, **characterized in that** the weight ratio of capsule material a) to biocide of component b) is 1:4 to 1:1.5, in particular from 1:4 to 1:2.

4. Microcapsules according to at least one of Claims 1 to 3, comprising as biocide of component b) at least b1) OIT and b2) propiconazole, preferably without IPBC.

5. Microcapsules according to at least one of Claims 1 to 4, **characterized in that** the biocide of component b) consists of OIT and propiconazole to an extent of more than 99% by weight.

6. Microcapsules according to at least one of Claims 1 to 3, comprising as biocide of component b) at least b1) OIT and b2) IPBC, preferably without propiconazole.

7. Microcapsules according to at least one of Claims 1 to 3 or 6, **characterized in that** the biocide of component b) consists of OIT and IPBC to an extent of more than 99% by weight.

8. Microcapsules according to at least one of Claims 1 to 3, **characterized in that** the microcapsules have a volume-averaged particle size of from 0.3 to 100 µm, preferably from 5 to 80 µm.

9. Microcapsules according to at least one of Claims 1 to 8, **characterized in that** the capsule material additionally comprises aminoplast resins, preferably melamine-formaldehyde resins modified with urea and/or phenol, aminoplast resins of a compound containing NH groups and acetaldehyde or glyoxal, urethane resins, cyanamide resins and dicyanamide resins, aniline resins, sulfonamide resins or mixtures of these resins.

10. Microcapsules according to at least one of Claims 1 to 8, **characterized in that** they comprise at least one protective colloid, especially at least one water-soluble polymer different from component a).

11. Method for producing microcapsules according to at least one of Claims 1 to 10, **characterized in that** it comprises at least the following steps:
a) depositing microencapsulation material comprising melamine-formaldehyde polymer onto biocides of component b) and then
b) treating the biocide-containing microcapsules which form at a temperature which is at least 5°C, preferably at least 10°C, in particular at least 20°C, higher than the deposition temperature in step a).

12. Biocidal compositions comprising microcapsules according to any of Claims 1 to 10.

13. Non-therapeutic use of the microcapsules according to any of Claims 1 to 10 as biocidal composition or in biocidal compositions.

14. Industrial materials comprising the biocidal compositions according to Claim 12 or microcapsules according to any of Claims 1 to 10.

15. Use of microcapsules according to any of Claims 1 to 10 or of the biocidal compositions according to Claim 12 for the protection of industrial materials.

## Revendications

1. Microcapsules, contenant
a) au moins un polymère mélamine-formaldéhyde en tant que matériau de capsule et
b) en tant que biocide au moins
b1) de l'OIT et
b2) du propiconazole et/ou du butylcarbamate de 3-iodo-2-propynyle (IPBC),
**caractérisées en ce que** le rapport pondéral de l'OIT à la somme de propiconazole et/ou IPBC vaut de 5 : 1 à 1 : 5, de préférence de 1 : 1 à 1 : 5, en particulier de 1 : 1,5 à 1 : 3.

2. Microcapsules selon la revendication 1, **caractérisées en ce que** le rapport pondéral du matériau de capsule a) au biocide du composant b) vaut de 1 : 4 à 4 : 1.

3. Microcapsules selon au moins l'une quelconque des revendications 1 et 2, **caractérisées en ce que** le rapport pondéral du matériau de capsule a) au biocide du composant b) vaut de 1 : 4 à 1 : 1,5, en particulier de 1 : 4 à 1 : 2.

4. Microcapsules selon au moins l'une quelconque des revendications 1 à 3, contenant en tant que biocide du composant b) au moins b1) de l'OIT et b2) du propiconazole, de préférence sans IPBC.

5. Microcapsules selon au moins l'une quelconque des revendications 1 à 4, **caractérisées en ce que** le biocide du composant b) consiste à raison de plus de 99 % en poids en OIT et propiconazole.

6. Microcapsules selon au moins l'une quelconque des revendications 1 à 3,
contenant en tant que biocide du composant b) au moins b1) de l'OIT et b2) de l'IPBC, de préférence sans propiconazole.

7. Microcapsules selon au moins l'une quelconque des revendications 1 à 3 ou 6, **caractérisées en ce que** le biocide du composant b) consiste à raison de plus de 99 % en poids en OIT et IPBC.

8. Microcapsules selon au moins l'une quelconque des revendications 1 à 3, **caractérisées en ce que** les microcapsules présentent une taille moyenne en volume de particule de 0,3 à 100 µm, de préférence de 5 à 80 µm.

9. Microcapsules selon au moins l'une quelconque des revendications 1 à 8, **caractérisées en ce que** le matériau de capsule contient en outre des résines aminoplaste, de préférence des résines mélamine-formaldéhyde modifiées avec de l'urée et/ou un phénol, des résines aminoplaste à base d'un composé contenant des groupes NH et d'acétaldéhyde ou de glyoxal, des résines uréthane, des résines cyanamide ou des résines dicyanamide, des résines aniline, des résines sulfonamide ou des mélanges de ces résines.

10. Microcapsules selon au moins l'une quelconque des revendications 1 à 8, **caractérisées en ce qu'**elles contiennent au moins un colloïde protecteur, en particulier au moins un polymère hydrosoluble différent du composant a).

11. Procédé pour la préparation de microcapsules selon au moins l'une quelconque des revendications 1 à 10, **caractérisé en ce qu'**il comprend au moins les étapes suivantes :
a) dépôt de matériau de microencapsulation, contenant du polymère mélamine-formaldéhyde, sur des biocides du composant b) et ensuite
b) traitement des microcapsules formées, contenant du biocide, à une température qui est supérieure d'au moins 5 °C, de préférence d'au moins 10 °C, en particulier d'au moins 20 °C, à la température du dépôt dans l'étape a).

12. Agents biocides contenant des microcapsules selon l'une quelconque des revendications 1 à 10.

13. Utilisation non thérapeutique des microcapsules selon l'une quelconque des revendications 1 à 10 en tant qu'agent biocide ou dans des agents biocides.

14. Matériaux techniques, contenant les agents biocides selon la revendication 12 ou des microcapsules selon l'une quelconque des revendications 1 à 10.

15. Utilisation de microcapsules selon l'une quelconque des revendications 1 à 10 ou des agents biocides selon la revendication 12 pour la protection de matériaux techniques.
